# EUROPEAN PATENT APPLICATION

(11) **EP 4 095 948 A1**
(43) Date of publication of application: **30.11.2022**
(21) Application number: 21829335.5
(22) Date of filing: 07.04.2021
(51) Int. Cl.: H01M 4/36, H01M 4/38, H01M 4/485

(54) **MULTI-ELEMENT COMPOSITE NEGATIVE ELECTRODE MATERIAL AND PREPARATION METHOD THEREFOR, NEGATIVE ELECTRODE MATERIAL OF LITHIUM-ION BATTERY, AND LITHIUM-ION BATTERY**

(30) Priority: 22.06.2020 CN 202010575478
(71) Applicant: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: CHE, Zongzhou, Shenzhen, Guangdong 518106 (CN); HE, Peng, Shenzhen, Guangdong 518106 (CN); REN, Jianguo, Shenzhen, Guangdong 518106 (CN); HE, Xueqin, Shenzhen, Guangdong 518106 (CN)
(74) Representative: advotec.
(86) International application number: PCT/CN2021/085844
(87) International publication number: WO 2021/258811

(57) **Abstract**

The present disclosure provides a multi-component composite anode material, a method for preparing the same, a lithium-ion battery anode material, and a lithium-ion battery. The multi-component composite anode material includes a core and a shell covering surface of the core; the core includes a graphite substrate and an embedding component embedded in the graphite substrate. The embedding component include nano silicon, lithium titanate, and a first non-graphitic carbon material. The shell includes a second non-graphitic carbon material. The method includes: calcining a first precursor formed by a titanium source, nano-silicon, a lithium source and graphite to prepare a second precursor containing lithium titanate; and carbon-coating the second precursor and a carbon source. The multi-component composite anode material has high specific capacity, high initial coulombic efficiency, ultra-low volume expansion, excellent cycle performance and excellent rate performance.

## Description

### CROSS-REFERENCE TO RELATED APPLICATION

The present application claims the benefit of priority of Chinese patent application No. CN202010575478.2 filed with the China Patent Office on June 22, 2020, entitled "MULTI-COMPONENT COMPOSITE ANODE MATERIAL, METHOD FOR PREPARING THE SAME, AND LITHIUM-ION BATTERY", the content of which is hereby incorporated by reference in its entirety.

### TECHNICAL FIELD

The present disclosure belongs to the field of energy storage materials, and relates to a multi-component composite anode material and a method for preparing the multi-component composite anode material, a lithium-ion battery anode material and a lithium-ion battery.

### BACKGROUND

Lithium-ion batteries have been widely used in portable electronics and electric vehicles due to their advantages of high working voltage, long cycle life, no memory effect, low self-discharge, and environmental friendliness. At present, commercial lithium-ion batteries mainly utilize graphite-based anode materials, however, they only have a theoretical specific capacity of 372mAh/g and cannot meet the requirements for high energy density of lithium-ion batteries in the future. As an anode material, silicon material has high theoretical specific capacity up to 4200mAh/g and a low lithium de-intercalation potential platform, therefore, it is the most promising alternative to graphite as an ideal choice for a new generation of lithium-ion battery anode materials. However, the silicon anode is accompanied by a large volumetric expansion up to 300% during a process of lithium de-intercalation and lithium intercalation, resulting in fragmentation and pulverization of silicon particles, and thus the loss of activity of the material, and finally a serious attenuation in cyclic performance. In addition, factors such as low conductivity and poor rate performance of silicon itself restrict the application of silicon in lithium battery anode materials.

At present, multi-component composite anode materials are prepared by using nano-silicon as raw materials, which obtain better comprehensive performance by combining characteristics of other materials. However, none of the multi-component composite anode materials in the related art can solve the problem of volumetric expansion of silicon, which still restricts the popularization of the multi-component composite anode materials.

### SUMMARY

In view of the above deficiencies in the related art, objects of the present disclosure is to provide a multi-component composite anode material and a method for preparing the multi-component composite anode material, a lithium-ion battery anode material and a lithium-ion battery. The multi-component composite anode material provided by the present disclosure can efficiently solve the problem of volumetric expansion of silicon, which has low expansion, high specific capacity, high initial coulombic efficiency, excellent cyclic performance and excellent rate performance.

In order to achieve the above objects, following technical solutions are provided.

A first aspect of the present disclosure provides a multi-component composite anode material. The multi-component composite anode material includes a core and a shell covering on the surface of the core. The core includes graphite and a composite component embedded in the graphite. The composite component includes nano-silicon, lithium titanate and a first non-graphitic carbon material. The shell includes a second non-graphitic carbon material.

The multi-component composite anode material provided by the present disclosure combines the advantages of nano-silicon, lithium titanate and an embedding structure. There is a synergistic effect among the various components. The graphite plays a role of inhibiting the volumetric expansion of the embedded material and stabilizing the structure of the composite material. Nano-silicon improves the specific capacity of the material. Lithium titanate further stabilizes the structure of the material to prevent the agglomeration of nano-silicon particles during the process of charging and discharging. The non-graphitic carbon material forms a conductive network between graphitic layers, which can improves not only the bonding strength between the graphitic layers, but also the ion and electron transmission rate of the material. The non-graphitic carbon material of the shell which covers the surface of the core can not only effectively prevent the electrolyte from penetrating into the core, so as to reduce the formation of SEI film, but also inhibit the volumetric expansion of the material included in the core material. Accordingly, the material provided by the present disclosure shows high specific capacity, high initial coulombic efficiency, ultra-low volumetric expansion, excellent cyclic performance and excellent rate performance when used as an anode material for lithium-ion batteries.

In a feasible embodiment, the lithium titanate has a porous network structure, and the nano-silicon and the first non-graphitic carbon material are both located in pores of the lithium titanate. Preferably, the nano-silicon is dispersed in the pores of the lithium titanate, and the first non-graphitic carbon material is filled in the gaps between the nano-silicon and the lithium titanate.

In a feasible embodiment, an overall multi-component composite anode material has a median particle size ranging from 0.4 µm to 45 µm. Preferably, the nano-silicon has a median particle size ranging from 1 nm to 150 nm. Preferably, the lithium titanate has a pore size ranging from 30 nm to 200 nm.

In a feasible embodiment, in the multi-component composite anode material, the nano-silicon has a mass fraction of 5%-50%, the graphite has a mass fraction of 5%-70%, the lithium titanate has a mass fraction of 15%-60%, and the first non-graphitic carbon material and the second non-graphitic carbon material have a total mass fraction of 5%-30%. Preferably, each one of the first non-graphitic carbon material and the second non-graphitic carbon material is independently at least one of hard carbon, soft carbon, activated carbon and amorphous carbon. Preferably, the first non-graphitic carbon material and the second non-graphitic carbon material are a same material. More preferably, the first non-graphitic carbon material is amorphous carbon.

A third aspect of the present disclosure provides a method for preparing the multi-component composite anode material. The method includes following steps: calcining a first precursor formed by a titanium source, nano-silicon, a lithium source and graphite to prepare a second precursor containing lithium titanate; and carbon-coating the second precursor.

In a feasible embodiment, a process for preparing the first precursor includes: mixing and dissolving the nano-silicon and the titanium source before conducting a hydrolysis to obtain a mixed dispersion liquid containing titanium dioxide and nano-silicon, and then mixing the mixed dispersion liquid with the lithium source and graphite. Preferably, the mixing the mixed dispersion liquid with the lithium source and graphite includes: ultrasonicating, crushing and granulating the mixture. More preferably, the crushing is performed by mechanical grinding. Further preferably, the mechanical grinding is carried out by using at least one of a high-speed stirring mill, a ball mill and a sand mill. More preferably, the granulating is performed through a manner of spray drying granulation.

In a feasible embodiment, the graphite is a hollow graphite. Preferably, a process for preparing the hollow graphite includes: mechanical processing and grinding a graphite-based material to obtain the hollow graphite. Preferably, the graphite-based material is natural graphite. Preferably, the graphite-based material has a median particle size of 1.0 µm-45.0 µm. Preferably, the hollow graphite has a median particle size of 1 µm-20 µm.

In a feasible embodiment, a molar ratio of the nano-silicon to the titanium source ranges from 0.1 to 0.7; preferably, the hydrolysis is conducted by dripping to a mixed solution obtained by mixing the nano-silicon and the titanium source.

In a feasible embodiment, the titanium source comprises at least one of tetrabutyl titanate, tetra-isopropyl titanate, titanium tetrachloride, titanium trichloride and titanocene dichloride. Preferably, the titanium source is tetrabutyl titanate. Preferably, the lithium source is selected from soluble lithium salts. More preferably, the lithium source includes at least one of lithium hydroxide, lithium acetate, lithium carbonate and lithium chloride. Preferably, a solvent used in the process of mixing and dissolving the nano-silicon and the titanium source is selected from at least one of tetrahydrofuran, dimethylacetamide, C1-C6 alcohol and C3-C8 ketone. Preferably, the C1-C6 alcohol is selected from at least one of methanol, ethanol, ethylene glycol, propanol, isopropanol, 1,2-propanediol, 1,3-propanediol, glycerol, n-butanol, 1,2-butanediol, 1,3-butanediol, 1,4-butanediol, n-pentanol and 2-hexanol. Preferably, the C3-C8 ketone is selected from at least one of acetone, methyl ethyl ketone, methyl propyl ketone, N-methylpyrrolidone, ethyl propyl ketone, methyl butyl ketone, ethyl n-butyl ketone, methyl amyl ketone and methyl hexyl ketone.

In a feasible embodiment, during the process of calcining the first precursor, a temperature for the calcining is 600°C-1200°C. Preferably, a duration for the calcining is 1h-8h. Preferably, the calcining is carried out under a protective atmosphere. More preferably, a gas for the protective atmosphere is at least one of nitrogen, helium, neon, argon, krypton and xenon.

In a feasible embodiment, a process of carbon-coating the second precursor with carbon source includes: mechanically fusing the second precursor and an organic carbon source and then performing a heating treatment under a protective atmosphere.

In a feasible embodiment, the mechanical fusion is performed by adding the second precursor and the organic carbon source to a fusion machine for fusing more than 0.5h. Preferably, a rotational speed of the fusion machine is adjusted to 500rpm-3000rpm, and a tool clearance width of the fusion machine is 0.01cm-1cm. Preferably, the organic carbon source includes at least one of coal pitch, petroleum pitch, mesophase pitch, coal tar, heavy oil for petroleum industry, heavy aromatic hydrocarbon, epoxy resin, phenolic resin, furfural resin, urea-formaldehyde resin, polyvinyl alcohol, polyvinyl chloride, polyethylene glycol, polyethylene oxide, polyvinylidene fluoride, glucose, sucrose, asphalt, polystyrene, polypyrrole, polyaniline, polyacrylic acid and starch.

In a feasible embodiment, the step of performing the heating treatment under a protective atmosphere comprises a first-stage heating and a second-stage heating, and the second-stage heating has a higher heating rate than the first-stage heating.

In a feasible embodiment, in the first-stage heating, the temperature is raised to 300°C-400°C in a heating rate of 1°C/min-3°C/min, and then preserved for 3h-6h. Preferably, in the second-stage heating, the temperature is raised to 700°C-1000°C in a heating rate of 4°C/min-6°C/min and then preserved for 2h-8h. Preferably, a gas for the protective atmosphere is selected from at least one of nitrogen, helium, neon, argon, krypton, xenon and hydrogen.

In a feasible embodiment, the graphite-based material is mechanically processed and ground to obtain the hollow graphite; the nano-silicon and the titanium source are dispersed in a molar ratio of 0.1-0.7 in an organic solvent to obtain a mixed dispersion, water is dripped to the mixed dispersion to conduct hydrolysis of the titanium source, the lithium source and the hollow graphite are added, ultrasonication, grinding mechanically and spray-drying granulating are performed to obtain a first precursor. The first precursor is calcined in a protective atmosphere at 600°C-1200°C for 1h-8h to obtain a second precursor. The second precursor and an organic carbon source are placed in a fusion machine with an adjusted rotational speed for fusing more than 0.5h. The rotational speed of the fusion machine is adjusted to 500rpm-3000rpm, and the tool clearance width of the fusion machine is 0.01cm-1cm. Heating treatments of two stages are performed under protective atmosphere. In a first-stage heating, temperature is raised to 300°C-400°C in a heating rate of 1°C/min-3°C/min, and then preserved for 3h-6h. In a second-stage heating, temperature is raised to 700°C-1000°C in a heating rate of 4°C/min-6°C/min and then preserved for 1h-8h.

A fourth aspect of the present disclosure provides a lithium-ion battery anode material. The lithium-ion battery anode material includes the above multi-component composite anode material or the multi-component composite anode material prepared by the above methods.

A fifth aspect of the present disclosure provides a lithium-ion battery. The lithium-ion battery includes the above lithium-ion battery anode material.

Compared with the related art, the present disclosure has following beneficial effects:
(1) The multi-component composite anode material provided by the present disclosure successfully combines the advantages of the nano-silicon, lithium titanate and the embedding structure. There is a synergistic effect among the various components. The graphite substrate material plays a role of inhibiting the volumetric expansion of the embedded material and stabilizing the structure of the material. Nano-silicon improves the specific capacity of the material. Lithium titanate having a porous network structure can serve as a skeleton support to buffer the volumetric expansion of silicon and further stabilizes the structure of the material, preventing the agglomeration of nano-silicon particles during the process of charging and discharging. The amorphous carbon matrix forms a conductive network among the graphitic layers, which can improve not only the bonding strength between the graphitic layers, but also the ion and electron transmission rate of the material. The carbon coating layer on the surface can not only effectively prevent the electrolyte from penetrating into the core to reduce the formation of SEI film, but also inhibit the volumetric expansion of the core material.
(2) The method provided by the present disclosure has simple operations, short process, and is easy to realize industrialized large-scale production.

### BRIEF DESCRIPTION OF DRAWINGS

FIG. 1 is a schematic flow chart of a preparation method of the present disclosure;
FIG. 2 is a scanning electron micrograph of a multi-component composite anode material prepared in Example 1;
FIG. 3 is an XRD image of a multi-component composite anode material prepared in Example 1;
FIG. 4 is a charge-discharge curve of a multi-component composite anode material prepared in Example 1; and
FIG. 5 a cyclic performance curve of a multi-component composite anode material prepared in Example 1.

### DESCRIPTION OF EMBODIMENTS

The present disclosure will be described in further detail below, in order to provide a better illustration of the present disclosure and facilitate understanding of the technical solutions of the present disclosure. However, the following embodiments are merely simple examples of the present disclosure and are not intended to represent or limit the scope of protection of the present disclosure. The scope of protection of the present disclosure is defined by the claims.

In a first aspect of the present disclosure, a multi-component composite anode material is provided. The multi-component composite anode material includes a core and a shell that covers surface of the core. The core includes graphite and an embedding component embedded in the graphite. The composite component includes nano-silicon, lithium titanate and a first non-graphitic carbon material. The shell includes a second non-graphitic carbon material.

The multi-component composite anode material provided by the present disclosure combines the advantages of nano-silicon, lithium titanate and an embedding structure. The graphite plays a role of inhibiting the volumetric expansion of the embedded material and stabilizing the structure of the composite material. Nano-silicon improves the specific capacity of the material. Lithium titanate further stabilizes the structure of the material to prevent the agglomeration of nano-silicon particles during the process of charging and discharging. The non-graphitic carbon material forms a conductive network between graphitic layers, which can improves not only the bonding strength between the graphitic layers, but also the ion and electron transmission rate of the material. The non-graphitic carbon material of the shell which covers the surface of the core can not only effectively prevent the electrolyte from penetrating into the core, so as to reduce the formation of SEI film, but also inhibit the volumetric expansion of the material included in the core material. Accordingly, the material provided by the present disclosure shows high specific capacity, high initial coulombic efficiency, ultra-low volumetric expansion, excellent cyclic performance and excellent rate performance when used as an anode material for lithium-ion batteries.

In the multi-component composite anode material provided by the disclosure, the lithium titanate is Li₄Ti₅O₁₂.

The following are preferred technical solutions of the present disclosure, but are not limitations to the technical solutions provided in the present disclosure, and through the following preferred technical solutions, technical objectives and beneficial effects of the present disclosure may be better achieved and realized.

In some embodiments, in the composite component, the lithium titanate has a porous network structure, and both the nano-silicon and the first non-graphitic carbon material are located in the pores of the lithium titanate.

In some embodiments, in the composite component, the nano-silicon is dispersed in the pores of the porous network structure possessed by the lithium titanate, and the first non-graphitic carbon material is filled in the gaps between the nano-silicon and lithium titanate. Therefore, the advantages of nano-silicon, lithium titanate and the embedding structure can be combined to have a synergistic effect among the various components.

In the present disclosure, the porous network structure of the lithium titanate can better serve as a framework support for buffering the volumetric expansion of silicon, thereby providing a more stable structure for the present material.

In some embodiments, the multi-component composite anode material has a median particle size of 0.4 µm-45 µm, such as 0.4µm, 1µm, 5µm, 10µm, 20µm, 30µm, 40µm or 45µm; preferably, 1µm-30 µm, further preferably, 1µm-20 µm. If the multi-component composite anode material has an excessive large particle size, the battery prepared would have poor cyclic performance and large volumetric expansion.

In some embodiments, the nano-silicon has a median particle size of 1 nm-150 nm, such as 1 nm, 5 nm, 10 nm, 25 nm, 50 nm, 75 nm, 100 nm, 125 nm or 150 nm, preferably, 10 nm-100 nm. If the nano-silicon particles has an excessive large size, its particles are easily broken after charging and discharging, resulting in degradation of cyclic performance of the material.

In some embodiments, the lithium titanate has a pore size of 30 nm-200 nm, such as 30 nm, 50 nm, 75 nm, 100 nm, 125 nm, 150 nm, 175 nm, or 200 nm. The pores in the lithium titanate reserve space for the expansion of the nano-silicon, which can reduce the volumetric expansion of the material to a certain extent.

In some embodiments, the first non-graphitic carbon material and/or the second non-graphitic carbon material include at least one of hard carbon, soft carbon, activated carbon and amorphous carbon.

In some embodiments, the first non-graphitic carbon material is amorphous carbon, and the amorphous carbon in the core is filled in the gap between the nano-silicon and the lithium titanate and contacts with them closely.

In some embodiments, based on 100% by mass of the multi-component composite anode material, the nano-silicon has a mass fraction of 5%-50%, such as 5%, 10%, 15%, 20%, 25%, 30%, 35%, 40%, 45% or 50%; the graphite has a mass fraction of 5%-70%, such as 5%, 10%, 20%, 30%, 40%, 50%, 60% or 70%; the lithium titanate has a mass fraction of 15%-60%, such as 15%, 20%, 30%, 40%, 50%, or 60%; the non-graphitic carbon material has a mass fraction of 5%-30%, such as 5%, 10%, 15%, 20%, 25% or 30%. The mass fraction of the non-graphitic carbon material includes the first non-graphitic carbon material in the shell and the second non-graphitic carbon material in the core.

In some embodiments, the first non-graphitic carbon material and the second non-graphitic carbon material are the same material, which can further simplify the preparation method.

A second aspect of the present disclosure provides a method for preparing the multi-component composite anode material as described in the first aspect. The method includes: calcining a first precursor formed by a titanium source, nano-silicon, lithium source and graphite to prepare a second precursor containing lithium titanate; and carbon-coating the second precursor with a carbon source. During the calcining process for forming lithium titanate, the nano-silicon and graphite both take part in the process of formation of the lithium carbonate. When the lithium titanate is formed with a porous network structure, the nano-silicon and graphite are distributed in its pores, and have a compact structure.

Further, the method includes: mixing and dissolving the nano-silicon and the titanium source, and then conducting a hydrolysis to obtain a mixed dispersion liquid containing titanium dioxide and nano-silicon, and then mixing the mixed dispersion liquid with the lithium source and graphite to obtain a first precursor; calcining the first precursor to obtain a second precursor, and mechanically fusing the second precursor and an organic carbon source to perform a heating treatment under a protective atmosphere, so as to obtain the multi-component composite anode material.

In the method provided by the present disclosure, during the hydrolysis of the titanium source, the titanium dioxide generated is uniformly dispersed on the surface of the nano-silicon and between the nano-silicon particles, and is treated by mixing it with the lithium source and graphite to obtain the first precursor (the first precursor is a mixture of the nano-silicon, titanium dioxide, lithium salt and graphite); further, the titanium dioxide particles and is reacted with the lithium source during the calcining process to interconnect so as to form the lithium titanate (Li₄Ti₅O₁₂) having a network structure. The nano-silicon particles are located in the lithium titanate network structure, and the nano-silicon/lithium titanate composite particles are embedded in the graphite material, obtaining the second precursor (the second precursor is the core of the multi-component composite anode material provided in the present disclosure). The heating treatment can enable the carbon material formed by the carbon source not only cover the surface of the particles uniformly, but also penetrate into the interior of the particles to fill the gaps between the nano-silicon and lithium titanate.

In some embodiments, the graphite is a hollow graphite. The hollow graphite refers to graphite particles with a large number of gaps obtained by splitting the graphitic sheet. The hollow graphite can be used to increase the filling amount of the embedding component, and further improve the electrical properties of the material. The hollow graphite can be a commercially available material or can be self-prepared.

In some embodiments, a method for preparing the hollow graphite includes: mechanical processing and grinding of graphite-based materials to obtain the hollow graphite. The process of mechanical processing and grinding would destroy the van der Waals forces between graphite layers, so that the graphitic sheet is cracked to obtain graphite particles with a large number of gaps.

In some embodiments, the graphite-based material is natural graphite.

In some embodiments, the graphite-based material has a median particle size of 1.0 µm-45.0 µm, such as 1.0µm, 5µm, 10µm, 15µm, 20µm, 25µm, 30µm, 35µm, 40µm or 45µm.

In some embodiments, the hollow graphite has a median particle size of 1 µm-20 µm, such as 1 µm, 2 µm, 5 µm, 10 µm, 15 µm or 20 µm.

In some embodiments, the titanium source includes at least one of tetrabutyl titanate, tetra-isopropyl titanate, titanium tetrachloride, titanium trichloride and titanocene dichloride. The titanium sources described above are all suitable to be used in the method of the present disclosure to form titanium dioxide through hydrolysis and then form the lithium titanate through calcination.

In some embodiments, a molar ratio of the nano-silicon to the titanium source is 0.1-0.7, such as 0.1, 0.2, 0.3, 0.4, 0.5, 0.6, or 0.7. In the method provided by the present disclosure, if the molar ratio of the nano-silicon to the titanium source is excessively large (i.e. excessive much nano-silicon), the lithium titanate with a porous network structure cannot be formed, resulting in poor ability in suppressing volumetric expansion of the material and poor cyclic stability. If the molar ratio of the nano-silicon to the titanium source is excessively small (i.e. excessive much titanium source), the material might have decreased reversible capacity.

In some embodiments, the organic solvent includes at least one of tetrahydrofuran, dimethylacetamide, C1-C6 alcohols and C3-C8 ketones.

In some embodiments, the C1-C6 alcohols include at least one of methanol, ethanol, ethylene glycol, propanol, isopropanol, 1,2-propanediol, 1,3-propanediol, glycerol, n-butanol, 1,2-butanediol, 1,3-butanediol, 1,4-butanediol, n-pentanol and 2-hexanol.

In some embodiments, the C3-C8 ketones include at least one of acetone, methyl ethyl ketone, methyl propyl ketone, N-methylpyrrolidone, ethyl propyl ketone, methyl butyl ketone, ethyl n-butyl ketone, methyl amyl ketone and methyl hexyl ketone.

In some embodiments, a way to add water used in the step of adding water to hydrolyze the titanium source into titanium dioxide is dripping. By dripping, the particle size of the titanium dioxide formed by hydrolysis can be better controlled and titanium dioxide, achieving more uniform particle size.

In some embodiments, the lithium source is a soluble lithium salt.

Further, the soluble lithium salt includes at least one of lithium hydroxide, lithium acetate, lithium carbonate and lithium chloride.

In some embodiments, the step of preparing the first precursor further includes a step of crushing and granulating after mixing. The method of mixing is performed by ultrasonication; the method of crushing is performed by mechanical grinding; machines for performing mechanical grinding is any one of a high-speed stirring mill, a ball mill and a sand mill; the method of granulating is performed through a manner of spray-drying granulation. The crushing and granulation steps before calcination obtain a raw material with smaller and more uniform particle size, which further improves the controllability of particle size of each component in the final prepared composite material and achieves the electrical properties of the composite material.

In some embodiments, the temperature used for the calcination treatment is 600°C-1200°C, such as 600°C, 700°C, 800°C, 900°C, 1000°C, 1100°C or 1200°C. In the present disclosure, if an excessive high temperature is used in the calcination treatment, part of the nano-silicon will react with the carbon material to form silicon carbide, resulting in poor cyclic performance of the material. If an excessive low temperature is used in the calcination treatment, incomplete carbonization of the organic carbon source will occur, resulting in decreased initial coulombic efficiency, cyclic performance and rate performance of the material.

In some embodiments, the duration for the calcination treatment is 1h(hour)-8h, such as 1h, 2h, 3h, 4h, 5h, 6h, 7h or 8h.

In some embodiments, the calcination treatment of the first precursor is carried out under a protective atmosphere.

In some embodiments, a gas for the protective atmosphere include at least one of nitrogen, helium, neon, argon, krypton and xenon. The introduction of the protective atmosphere can avoid the occurrence of side reactions during the process of calcination under high temperature.

In some embodiments, the carbon source is an organic carbon source.

In some embodiments, the organic carbon source includes at least one of coal pitch, petroleum pitch, mesophase pitch, coal tar, heavy oil for petroleum industry, heavy aromatic hydrocarbon, epoxy resin, phenolic resin, furfural resin, urea-formaldehyde resin, polyvinyl alcohol, polyvinyl chloride, polyethylene glycol, polyethylene oxide, polyvinylidene fluoride, glucose, sucrose, asphalt, polystyrene, polypyrrole, polyaniline, polyacrylic acid and starch.

In some embodiments, the mixing of the second precursor and the carbon source is performed through mechanical fusion.

In some embodiments, a method for the mechanical fusion includes: adding raw materials to a fusion machine for fusing more than 0.5h, such as 1h, 2h, 2.5h, 3h. Preferably, the rotational speed is adjusted to 500rpm-3000rpm, and the tool clearance width is 0.01cm-1cm. The mixing uniformity of the materials can be improved by further controlling the operating parameters of the fusion machine.

In some embodiments, the heating treatment performed during the process of carbon coating is carried out under a protective atmosphere. Gas for the protective atmosphere include at least one of nitrogen, helium, neon, argon, krypton, xenon and hydrogen.

In some embodiments, the heating treatment performed in the step of performing a heating treatment under a protective atmosphere includes a first-stage heating and a second-stage heating. The second-stage heating has a higher heating rate than the first-stage heating. The heating manner utilized by the present disclosure is based on following reasons: the firing temperature in the first-stage heating is controlled around the softening point of the organic carbon source, such that the carbon source is in a molten state to facilitate penetration into the interior of the material; and increasing the heating rate of the second-stage heating is to quickly increase the temperature and reach the reaction temperature of the second-stage, under which the organic carbon source can be carbonized completely, increasing the firing temperature can speed up the carbonization reaction rate.

In some embodiments, the first-stage heating is raised to 300°C-400°C (such as 300°C, 320°C, 340°C, 360°C, 380°C or 400°C) in a heating rate of 1°C/min-3°C/min (such as 1 °C/min, 1.5°C/min, 2°C/min, 2.5°C/min, 3°C/min) and then preserved for 3h-6h (such as 3h, 3.5h, 4h, 4.5h, 5h, 5.5h or 6h).

In some embodiments, in the second-stage heating, the temperature is raised to 700°C-1000°C (such as 700°C, 800°C, 900°C or 1000°C) in a heating rate of 4°C/min-6°C/min (such as 4°C/min, 4.5°C/min, 5°C/min, 5.5°C/min or 6°C/min) and then preserved for 1h-8h (such as 1h, 2h, 3h, 4h, 5h, 6h, 7h or 8h).

As a further preferred embodiment of the method of the present disclosure, the method includes following steps:
mechanical processing and grinding the graphite-based material to obtain the hollow graphite;
dispersing the nano-silicon and the titanium source in a molar ratio of 0.1-0.7 in an organic solvent to obtain a mixed solution, dripping to the mixed dispersion solution to perform hydrolysis of titanium source; adding the soluble lithium salt and the hollow graphite to perform ultrasonication, grinding mechanically and spray-drying granulating to obtain a first precursor; and
calcining the first precursor in a protective atmosphere at 600°C-1200°C for 1h-8h to obtain a second precursor; placing the second precursor and an organic carbon source into a fusion machine with an adjusted rotational speed of 500rpm-3000rpm and a tool clearance width of 0.01cm-1cm for fusing more than 0.5h; then performing heating treatments of two stages under protective atmosphere, in which a first stage is in a temperature of 300°C-400°C in a heating rate of 1°C/min-3°C/min, and then preserved for 3h-6h; and a second stage is in a temperature of 700°C-1000°C in a heating rate of 4°C/min-6°C/min, and then preserved for 1h-8h.

In the above-mentioned further preferred embodiment, the nano-silicon particles, lithium titanate and amorphous carbon are successfully embedded in the graphite material by combining mechanical grinding, mechanical fusion and carbon-coating technology, in which the lithium titanate has a porous network structure, the nano-silicon particles are dispersed in its pores, while the amorphous carbon matrix fills in the gaps between the nano-silicon and lithium titanate.

A third aspect of the present disclosure provides a lithium-ion battery anode material, in which the anode material include the above-mentioned multi-component composite anode material. The anode material provided by the present disclosure has no problem of excessive expansion of silicon particles during its use, and improves the service life of the electrode material.

A fourth aspect of the present disclosure provides a lithium-ion battery. The lithium-ion battery includes the lithium-ion battery anode material according to the third aspect. The lithium-ion battery of the present disclosure has high operational stability and is suitable for popularization.

Typical but non-limiting examples of the present disclosure are as follows.

### Example 1

In Example 1, a multi-component composite anode material was prepared according to following method.
(1) Natural flake graphite was mechanically pulverized to graphite particles with a median particle size of 10.0-30.0 µm, then the obtained graphite particles were placed in a ball mill containing 0.01 mm zirconia beads and a solvent of ethylene glycol, and then were ball-milled to obtain a hollow graphite with a median particle size of 1.0-15.0 µm.
(2) The nano-silicon with a median particle size of 100nm and tetrabutyl titanate in a molar ratio of 4:1 were dispersed in a solvent of ethanol, were subjected to ultrasonic stirring for 0.5h, deionized water and tetrabutyl titanate in a molar ratio of 1:4 were slowly dripped to the obtained solution and stirred for 20min, lithium acetate and hollow graphite were then successively added thereto while controlling the molar ratio of the lithium acetate, tetrabutyl titanate, nano silicon, hollow graphite to be 0.4:0.5:2:2, and then subjected to ultrasonic stirring for 0.5h to form a uniform suspension, the mixed solution was placed into a ball mill tank to grind for 0.5h and then was taken out, a ground slurry was granulated by spray-drying to generate a first precursor.
(3) The first precursor obtained in step (2) was placed in a box furnace and was calcined at 800°C under a nitrogen atmosphere for 6 hours to obtain a second precursor.
(4) The second precursor obtained in step (3) and the coal pitch were mixed uniformly in a weight ratio of 1:0.3 and then added to a fusion machine with an adjusted rotational speed of 2000 rpm and a tool clearance width of 0.5cm for fusing 2h to obtain a fused precursor material. Subsequently, the fused precursor material was placed in a box furnace under nitrogen atmosphere, heated to 350°C in a heating rate of 2°C/min, preserved for 3h, heated to 900°C in a heating rate of 5°C/min, preserved for 4h, cooled naturally, and then sieved to obtain the multi-component composite anode material.

The multi-component composite anode material prepared in Example 1 includes a core and a shell covering on the surface of the core. The core includes graphite and an embedding component embedded in the graphite. The embedding component embedded in the graphite includes nano-silicon, lithium titanate (Li₄Ti₅O₁₂) and amorphous carbon. The shell is a material of amorphous carbon. In the core, the lithium titanate has a porous network structure. The nano-silicon are dispersed in pores of the lithium titanate. The amorphous carbon fills the gaps between the nano-silicon and lithium titanate. The multi-component composite anode material has a median particle size of 20 µm, the nano-silicon has a median particle size of 80 nm, and the lithium titanate has a pore size of 100 nm. Based on 100% by mass of the multi-component composite anode material, the mass fraction of the nano-silicon is 40%, the mass fraction of the graphite is 18%, the mass fraction of the lithium titanate is 27%, and the mass fraction of the non-graphitic carbon material is 15%.

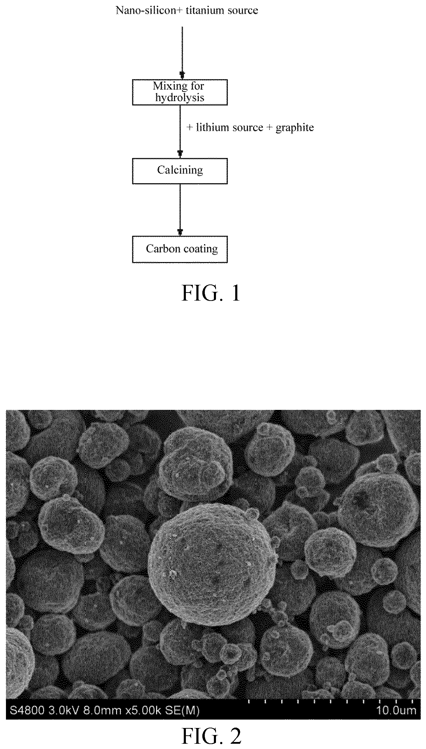

FIG. 2 shows a scanning electron micrograph of the multi-component composite anode material prepared in Example 1. It can be seen from FIG. 2 that the material has a spherical structure, and there is a uniform carbon coating layer.

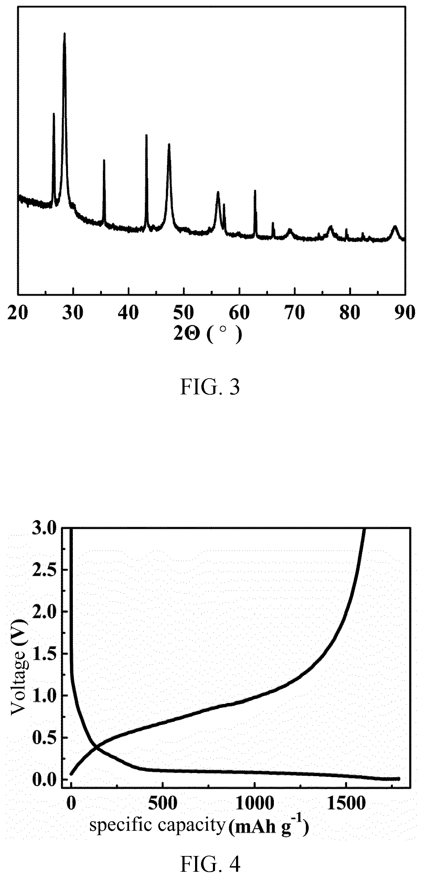

FIG. 3 shows a XRD image of the multi-component composite anode material prepared in Example 1. It can be seen from FIG. 3 that there are diffraction peaks of silicon, graphite and lithium titanate in the material.

### Example 2

In Example 2, a multi-component composite anode material was prepared according to following method.
(1) Natural flake graphite was mechanically pulverized to graphite particles with a median particle size of 10.0-30.0 µm, then the obtained graphite particles were placed in a ball mill containing 0.01 mm zirconia beads and a solvent of ethylene glycol, and then were ball-milled to obtain a hollow graphite with a median particle size of 1.0-15.0 µm.
(2) The nano-silicon with a median particle size of 100nm and tetrabutyl titanate in a molar ratio of 4:1 were dispersed in a solvent of isopropanol, were subjected to ultrasonic stirring for 0.5h, deionized water and tetrabutyl titanate in a molar ratio of 1:4 were slowly dripped to the obtained solution and stirred for 20min, lithium hydroxide and hollow graphite were then successively added thereto while controlling the molar ratio of the lithium hydroxide, tetrabutyl titanate, nano silicon, hollow graphite to be 0.4:0.5:2:2, and then subjected to ultrasonic stirring for 0.5h to form a uniform suspension, the mixed solution was placed into a ball mill tank to grind for 0.5h and then was taken out, a ground slurry was granulated by spray-drying to generate a first precursor.
(3) The first precursor obtained in step (2) was placed in a box furnace and was calcined at 800°C under a nitrogen atmosphere for 6 hours to obtain a second precursor.
(4) The second precursor obtained in step (3) and the petroleum pitch were mixed uniformly in a weight ratio of 1:0.35 and then added to a fusion machine with an adjusted rotational speed of 2000 rpm and a tool clearance width of 0.5cm for fusing 2h to obtain a fused precursor material. Subsequently, the fused precursor material was placed in a box furnace under nitrogen atmosphere, heated to 350°C in a heating rate of 2°C/min, preserved for 3h, heated to 950°C in a heating rate of 5°C/min, preserved for 4h, cooled naturally, and then sieved to obtain the multi-component composite anode material.

The multi-component composite anode material prepared in Example 2 includes a core and a shell covering on the surface of the core. The core includes graphite and an embedding component embedded in the graphite. The embedding component embedded in the graphite includes nano-silicon, lithium titanate (Li₄Ti₅O₁₂) and amorphous carbon. The shell is a material of amorphous carbon. In the core, the lithium titanate has a porous network structure. The nano-silicon are dispersed in pores of the lithium titanate. The amorphous carbon fills the gaps between the nano-silicon and lithium titanate. The multi-component composite anode material has a median particle size of 15 µm, the nano-silicon has a median particle size of 100 nm, and the lithium titanate has a pore size of 150 nm. Based on 100% by mass of the multi-component composite anode material, the mass fraction of the nano-silicon is 40%, the mass fraction of the graphite is 17%, the mass fraction of the lithium titanate is 26%, and the mass fraction of the non-graphitic carbon material is 17%.

The test results of performances of the multi-component composite anode materials prepared in Example 2 are shown in Table 1.

### Example 3

In Example 3, a multi-component composite anode material was prepared according to following method.
(1) Natural flake graphite was mechanically pulverized to graphite particles with a median particle size of 20.0-45.0 µm, then the obtained graphite particles were placed in a ball mill containing 0.01 mm zirconia beads and a solvent of ethylene glycol, and then were ball-milled to obtain a hollow graphite with a median particle size of 5.0-20.0 µm.
(2) The nano-silicon with a median particle size of 150nm and tetra-isopropyl titanate in a molar ratio of 4:1 were dispersed in a solvent of ethylene glycol, were subjected to ultrasonic stirring for 0.5h, deionized water and tetrabutyl titanate in a molar ratio of 1:4 were slowly dripped to the obtained solution and stirred for 20min, lithium hydroxide and hollow graphite were then successively added thereto while controlling the molar ratio of the lithium hydroxide, tetrabutyl titanate, nano silicon, hollow graphite to be 0.4:0.5:2:1.5, and then subjected to ultrasonic stirring for 0.5h to form a uniform suspension, the mixed solution was placed into a ball mill tank to grind for 0.5h and then was taken out, a ground slurry was granulated by spray-drying to generate a first precursor.
(3) The first precursor obtained in step (2) was placed in a box furnace and was calcined at 600°C under a nitrogen atmosphere for 3 hours to obtain a second precursor.
(4) The second precursor obtained in step (3) and the coal tar were mixed uniformly in a weight ratio of 1:0.4 and then added to a fusion machine with an adjusted rotational speed of 2000 rpm and a tool clearance width of 0.01cm for fusing 1h to obtain a fused precursor material. Subsequently, the fused precursor material was placed in a box furnace under nitrogen atmosphere, heated to 300°C in a heating rate of 1°C/min, preserved for 6h, heated to 700°C in a heating rate of 4°C/min, preserved for 8h, cooled naturally, and then sieved to obtain the multi-component composite anode material.

The multi-component composite anode material prepared in Example 3 includes a core and a shell covering on the surface of the core. The core includes graphite and an embedding component embedded in the graphite. The embedding component embedded in the graphite includes nano-silicon, lithium titanate (Li₄Ti₅O₁₂) and amorphous carbon. The shell is a material of amorphous carbon. In the core, the lithium titanate has a porous network structure. The nano-silicon are dispersed in pores of the lithium titanate. The amorphous carbon fills the gaps between the nano-silicon and lithium titanate. The multi-component composite anode material has a median particle size of 18 µm, the nano-silicon has a median particle size of 120 nm, and the lithium titanate has a pore size of 200. Based on 100% by mass of the multi-component composite anode material, the mass fraction of the nano-silicon is 40%, the mass fraction of the graphite is 12%, the mass fraction of the lithium titanate is 28%, and the mass fraction of the non-graphitic carbon material is 20%.

The test results of performances of the multi-component composite anode materials prepared in Example 3 are shown in Table 1.

### Example 4

In Example 4, a multi-component composite anode material was prepared according to following method.
(1) Natural flake graphite was mechanically pulverized to graphite particles with a median particle size of 5.0-25.0 µm, then the obtained graphite particles were placed in a ball mill containing 0.01 mm zirconia beads and a solvent of ethylene glycol, and then were ball-milled to obtain a hollow graphite with a median particle size of 1.0-10.0 µm.
(2) The nano-silicon with a median particle size of 10nm and tetrabutyl titanate in a molar ratio of 4:1 were dispersed in a solvent of tetrahydrofuran, were subjected to ultrasonic stirring for 0.5h, deionized water and tetrabutyl titanate in a molar ratio of 1:4 were slowly dripped to the obtained solution and stirred for 20min, lithium hydroxide and hollow graphite were then successively added thereto while controlling the molar ratio of the lithium hydroxide, tetrabutyl titanate, nano silicon, hollow graphite to be 0.4:0.5:2:3, and then subjected to ultrasonic stirring for 0.5h to form a uniform suspension, the mixed solution was placed into a ball mill tank to grind for 0.5h and then was taken out, a ground slurry was granulated by spray-drying to generate a first precursor.
(3) The first precursor obtained in step (2) was placed in a box furnace and was calcined at 1200°C under a nitrogen atmosphere for 1h to obtain a second precursor.
(4) The second precursor obtained in step (3) and the glucose were mixed uniformly in a weight ratio of 1:0.5 and then added to a fusion machine with an adjusted rotational speed of 3000 rpm and a tool clearance width of 1cm for fusing 3.5h to obtain a fused precursor material. Subsequently, the fused precursor material was placed in a box furnace under nitrogen atmosphere, heated to 400°C in a heating rate of 3°C/min, preserved for 5h, heated to 1000°C in a heating rate of 6°C/min, preserved for 1h, cooled naturally, and then sieved to obtain the multi-component composite anode material.

The multi-component composite anode material prepared in Example 4 includes a core and a shell covering on the surface of the core. The core includes graphite and an embedding component embedded in the graphite. The embedding component embedded in the graphite includes nano-silicon, lithium titanate (Li₄Ti₅O₁₂) and amorphous carbon. The shell is a material of amorphous carbon. In the core, the lithium titanate has a porous network structure. The nano-silicon are dispersed in pores of the lithium titanate. The amorphous carbon fills the gaps between the nano-silicon and lithium titanate. The multi-component composite anode material has a median particle size of 12 µm, the nano-silicon has a median particle size of 60 nm, and the lithium titanate has a pore size of 120 nm. Based on 100% by mass of the multi-component composite anode material, the mass fraction of the nano-silicon is 36%, the mass fraction of the graphite is 22%, the mass fraction of the lithium titanate is 20%, and the mass fraction of the non-graphitic carbon material is 22%.

The test results of performances of the multi-component composite anode materials prepared in Example 4 are shown in Table 1.

### Comparative Example 1:

A method for preparing a multi-component composite anode material in Comparative Example 1 has same steps as Example 1 except operations in step (2). The operations in step (2) of the Comparative Example 1 were conducted as follows: the nano-silicon with a median particle size of 100nm and lithium titanate with a median particle size of 20-150 nm were mixed in a molar ratio of 4:1 in ethanol, and then hollow graphite was added to control the molar ratio of lithium titanate:nano silicon: graphite to be 1:4:4, ultrasonic stirring for 0.5h to form a uniform suspension, the mixed solution was then placed into a ball mill to grind for 0.5h and then was taken, a ground slurry was granulated by spray-drying to generate a first precursor.

In the multi-component composite anode material prepared by Comparative Example 1, the lithium titanate was dispersed in the nano-silicon in a form of granule, and has no porous network structure.

The test results of performances of the multi-component composite anode materials prepared in Comparative Example 1 are shown in Table 1.

### Comparative Example 2:

A method for preparing a multi-component composite anode material in Comparative Example 2 can refer to Example 1. All raw materials and operations used in various steps were same as Example 1 except that no nano-silicon was added in step (2).

The multi-component composite anode material obtained in Comparative Example 2 contains no nano-silicon.

The test results of performances of the multi-component composite anode materials prepared in Comparative Example 2 are shown in Table 1.

### Comparative Example 3:

A method for preparing a multi-component composite anode material in Comparative Example 3 can refer to Example 1. It differs from Example 1 that the temperature for calcination was 500°C.

### Comparative Example 4:

A method for preparing a multi-component composite anode material in Comparative Example 4 can refer to Example 1. It differs from Example 1 that the temperature for calcination was 1300°C.

### Comparative Example 5:

A method for preparing a multi-component composite anode material in Comparative Example 5 can refer to Example 1. It differs from Example 1 that the molar ratio of the lithium acetate:tetrabutyl titanate:nano silicon:hollow graphite was controlled to be 0.8: 1:2:3.

### Comparative Example 6:

A method for preparing a multi-component composite anode material in Comparative Example 6 can refer to Example 1. It differs from Example 1 that the molar ratio of the lithium acetate:tetrabutyl titanate:nano silicon:hollow graphite was controlled to be 0.2:0.25:2:3.

### Testing Method

The surface morphology and particle size of the samples were observed with a S4800 scanning electron microscope from Hitachi Corporation.

The anode materials prepared in various Examples and Comparative Examples, a conductive agent (conductive graphite) and a binder (SBR) were dissolved and mixed in a ratio of 80:10:10 by mass, the obtained mixed slurries were coated on a copper foil current collector, dried in vacuum to obtain anode electrodes. Afterwards, CR2016 button batteries were assembled by 1mol/L of LiPF₆/EC+DMC+EMC (v/v=1:1:1) electrolyte, SK (12µm) diaphragm, and shell using a conventional process. In the electrochemical performance test, the current density of 1C corresponds to 1000mAh/g. The capacity and the initial coulombic efficiency at 0.1C were tested under a condition of 0.1C. The capacity and the initial coulombic efficiency at 1C were tested under a condition of 1C. Further, the capacity retention rate after 200 charge-discharge cycles was tested under a condition of 0.1C. The volumetric expansion rate after 50 charge-discharge cycles was tested under a condition of 0.1C.

FIG. 4 shows a charge-discharge curve of the multi-component composite anode material prepared in Example 1. It can be seen from FIG. 4 that the initial charge capacity of the prepared material is greater than 1600mAh/g, and the initial coulombic efficiency is greater than 89%.

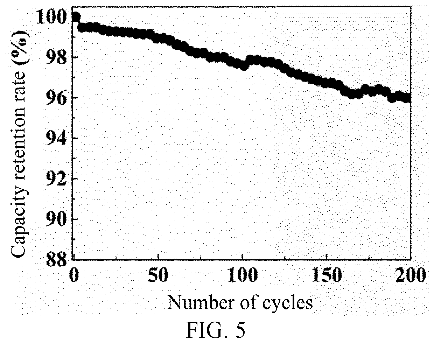

FIG. 5 shows a cyclic performance curve of the multi-component composite anode material prepared in Example 1. It can be seen from FIG. 5 that the capacity retention rate after 200 charge-discharge cycles is greater than 96% at a current density of 0.1C.

The test results of performances of the multi-component composite anode materials prepared in the above examples are shown in Table 1.

Table 1 shows the electrochemical test results of the multi-component composite anode materials prepared in various Examples and Comparative Examples.

**Table 1**

| Sample name | 0.1C | | 1C | | Capacity retention rate after 200 charge-discharg e cycles (%) | Volumetric expansion rate after 50 charge-discharge cycles (%) |
|---|---|---|---|---|---|---|
| | Capacity (mAh/g) | Initial coulombic efficiency (%) | Capacity (mAh/g) | Initial coulombic efficiency (%) | | |
| Example 1 | 1600 | 89.5 | 1450 | 86 | 96 | 43 |
| Example 2 | 1580 | 89.3 | 1420 | 85.4 | 95.2 | 42 |
| Example 3 | 1540 | 88.8 | 1410 | 85.3 | 96.2 | 42 |
| Example 4 | 1460 | 89.1 | 1350 | 86.1 | 96.4 | 41 |
| Comparative Example 1 | 1590 | 88.6 | 1390 | 84.6 | 91.3 | 54 |
| Comparative Example 2 | 220 | 87 | 165 | 5 | 96.8 | 21 |

It can be seen from table 1 in combination with the Examples and Comparative Examples describe above that the multi-component composite anode material prepared in the Examples successfully combines the advantages of the nano-silicon, lithium titanate and the embedding structure. The graphite substrate material plays a role of inhibiting the volumetric expansion of the embedded material and stabilizing the structure of the material. Nano-silicon improves the specific capacity of the material. Lithium titanate having a porous network structure can serve as a skeleton support to buffer the volumetric expansion of silicon and further stabilizes the structure of the material, preventing the agglomeration of nano-silicon particles during the process of charging and discharging. The amorphous carbon matrix forms a conductive network among the graphitic layers, which can improve not only the bonding strength between the graphitic layers, but also the ion and electron transmission rate of the material. The carbon coating layer on the surface can not only effectively prevent the electrolyte from penetrating into the core to reduce the formation of SEI film, but also inhibit the volumetric expansion of the core material. Therefore, the products prepared in the Examples has high initial coulombic efficiency, low volumetric expansion, excellent cyclic performance and excellent rate performance.

Compared Comparative Example 1 with Example 1, the lithium titanate in the product of Comparative Example 1 is in a form of granule and has no porous network structure, so that it leads to a poor ability of the material to inhibit the volumetric expansion of nano-silicon, thereby resulting in poor cyclic performance and great volumetric expansion after 50 cycles of the material.

Compared Comparative Example 2 with Example 1, the product prepared in the Comparative Example 2 does not contain nano-silicon, resulting in a lower capacity per gram.

It can be seen from Example 1 and Comparative Examples 1-2 that in the present disclosure, by adopting the porous network structure of the lithium titanate and introducing the nano-silicon, the volumetric expansion of nano-silicon can be significantly suppressed, and the multi-component composite anode material has good cyclic performance and high capacity per gram.

The applicant declares that the present disclosure illustrates the detailed method of the present disclosure through the above-mentioned Examples, but is not limited to the above detailed method, which means that the present disclosure does not have to rely on the detailed method described above for implementation. Those skilled in the art should be understood that any improvements to the present disclosure, the equivalent substitution of various raw materials of the product of the present disclosure, and the addition of auxiliary ingredients, the selection of the specific manners all fall within the protection scope and disclosing range of the present disclosure.

### Industrial Applicability

The multi-component composite anode material provided by the present disclosure combines the advantages of the nano-silicon, lithium titanate and the embedding structure, and further integrates the processes of mechanical grinding, mechanical fusion and carbon coating. In the prepared multi-component composite anode material, the graphite substrate plays a role of inhibiting the volumetric expansion of the embedding material and stabilizing the structure of the material. Nano-silicon improves the specific capacity of the material. Lithium titanate further stabilizes the structure of the material to prevent the agglomeration of nano-silicon particles during the process of charging and discharging. The non-graphitic carbon material forms a conductive network between graphitic layers, which can improves not only the bonding strength between the graphitic layers, but also the ion and electron transmission rate of the material. The non-graphitic carbon material of the shell can not only effectively prevent the electrolyte from penetrating into the core, so as to reduce the formation of SEI film, but also inhibit the volumetric expansion of the material included in the core material.

The material used as an anode material for lithium-ion batteries shows high specific capacity, high initial coulombic efficiency, ultra-low volumetric expansion, excellent cyclic performance and excellent rate performance. The material can effectively solve the problem of volumetric expansion of the nano-silicon, overcome the problem of inhibiting the industrial application of the nano-silicon for a long time, and has a very good market application prospect.

## Claims

1. A multi-component composite anode material, comprising a core and a shell covering surface of the core, wherein the core comprises graphite and a composite component embedded in the graphite, and the composite component comprises nano-silicon, lithium titanate and a first non-graphitic carbon material; and the shell comprises a second non-graphitic carbon material.

2. The multi-component composite anode material according to claim 1, wherein the lithium titanate has a porous network structure, and the nano-silicon and the first non-graphitic carbon material are both located in pores of the lithium titanate; and/or
the nano-silicon is dispersed in the pores of the lithium titanate, and the first non-graphitic carbon material is filled in gaps between the nano-silicon and the lithium titanate.

3. The multi-component composite anode material according to claim 1 or 2, an overall multi-component composite anode material has a median particle size ranging from 0.4 µm to 45 µm; and/or
the nano-silicon has a median particle size ranging from 1 nm to 150 nm; and/or
the lithium titanate has a pore size ranging from 30 nm to 200 nm.

4. The multi-component composite anode material according to any one of claims 1 to 3, wherein in the multi-component composite anode material, the nano-silicon has a mass fraction of 5%-50%, the graphite has a mass fraction of 5%-70%, the lithium titanate has a mass fraction of 15%-60%, and the first non-graphitic carbon material and the second non-graphitic carbon material have a total mass fraction of 5%-30%; and/or
each one of the first non-graphitic carbon material and the second non-graphitic carbon material is independently at least one of hard carbon, soft carbon, activated carbon and amorphous carbon; and/or
the first non-graphitic carbon material and the second non-graphitic carbon material are a same material; and/or
the first non-graphitic carbon material is amorphous carbon.

5. A method for preparing a multi-component composite anode material according to any one of claims 1 to 4, comprising following steps:
calcining a first precursor formed by a titanium source, nano-silicon, a lithium source and graphite to prepare a second precursor containing lithium titanate; and
carbon-coating the second precursor to obtain the multi-component composite anode material.

6. The method according to claim 5, wherein a process for preparing the first precursor comprises: mixing and dissolving the nano-silicon and the titanium source before conducting a hydrolysis to obtain a mixed dispersion liquid containing titanium dioxide and nano-silicon, and then mixing the mixed dispersion liquid with the lithium source and graphite; and/or
the mixing the mixed dispersion liquid with the lithium source and graphite comprises: ultrasonicating, crushing and granulating the mixture; and/or
the crushing is performed by mechanical grinding; and/or
the granulating is performed through a manner of spray drying granulation.

7. The method according to claim 6, wherein the graphite is a hollow graphite; and/or
a process for preparing the hollow graphite comprises: mechanical processing and grinding a graphite-based material to obtain the hollow graphite; and/or
the graphite-based material is natural graphite; and/or
the graphite-based material has a median particle size of 1.0 µm-45.0 µm; and/or
the hollow graphite has a median particle size of 1 µm-20 µm.

8. The method according to claim 6, wherein a molar ratio of the nano-silicon to the titanium source ranges from 0.1 to 0.7; and/or
the hydrolysis is conducted by dripping to a mixed solution obtained by mixing the nano-silicon and the titanium source.

9. The method according to claim 8, wherein the titanium source comprises at least one of tetrabutyl titanate, tetra-isopropyl titanate, titanium tetrachloride, titanium trichloride and titanocene dichloride; and/or
the lithium source is selected from soluble lithium salts; and/or
the lithium source comprises at least one of lithium hydroxide, lithium acetate, lithium carbonate and lithium chloride; and/or
a solvent used in the process of mixing and dissolving the nano-silicon and the titanium source is selected from organic solvents; and/or
the solvent comprises at least one of tetrahydrofuran, dimethylacetamide, C1-C6 alcohol and C3-C8 ketone; and/or
the C1-C6 alcohol is selected from at least one of methanol, ethanol, ethylene glycol, propanol, isopropanol, 1,2-propanediol, 1,3-propanediol, glycerol, n-butanol, 1,2-butanediol, 1,3-butanediol, 1,4-butanediol, n-pentanol and 2-hexanol; and/or
the C3-C8 ketone is selected from at least one of acetone, methyl ethyl ketone, methyl propyl ketone, N-methylpyrrolidone, ethyl propyl ketone, methyl butyl ketone, ethyl n-butyl ketone, methyl amyl ketone and methyl hexyl ketone.

10. The method according to claim 5, wherein during the process of calcining the first precursor, a temperature for the calcining is 600°C-1200°C; and/or
a duration for the calcining is 1h-8h; and/or
the calcining is carried out under a protective atmosphere; and/or
a gas for the protective atmosphere is at least one of nitrogen, helium, neon, argon, krypton and xenon.

11. The method according to claim 5, wherein a process of carbon-coating the second precursor comprises: mixing the second precursor and an organic carbon source, and performing a heating treatment under a protective atmosphere.

12. The method according to claim 11, wherein mixing the second precursor with an organic carbon source is performed through mechanical fusion; and/or
the mechanical fusion is performed by adding the second precursor and the organic carbon source to a fusion machine for fusing more than 0.5h; and/or
a rotational speed of the fusion machine is adjusted to 500rpm-3000rpm, and a tool clearance width of the fusion machine is 0.01cm-1cm; and/or
the organic carbon source comprises at least one of coal pitch, petroleum pitch, mesophase pitch, coal tar, heavy oil for petroleum industry, heavy aromatic hydrocarbon, epoxy resin, phenolic resin, furfural resin, urea-formaldehyde resin, polyvinyl alcohol, polyvinyl chloride, polyethylene glycol, polyethylene oxide, polyvinylidene fluoride, glucose, sucrose, asphalt, polystyrene, polypyrrole, polyaniline, polyacrylic acid and starch.

13. The method according to claim 11, wherein the step of performing the heating treatment under a protective atmosphere comprises a first-stage heating and a second-stage heating, and the second-stage heating has a higher heating rate than the first-stage heating.

14. The method according to claim 13, wherein in the first-stage heating, the temperature is raised to 300°C-400°C in a heating rate of 1°C/min-3°C/min, and then preserved for 3h-6h; and/or
in the second-stage heating, the temperature is raised to 700°C-1000°C in a heating rate of 4°C/min-6°C/min and then preserved for 2h-8h; and/or
a gas for the protective atmosphere is selected from at least one of nitrogen, helium, neon, argon, krypton, xenon and hydrogen.

15. The method according to any one of claims 6 to 14, further comprising:
mechanically processing and grinding the graphite-based material to obtain the hollow graphite;
dispersing the nano-silicon and the titanium source in a molar ratio of 0.1-0.7 in an organic solvent to obtain a mixed dispersion, dripping water to the mixed dispersion to conduct hydrolysis of the titanium source, adding the lithium source and the hollow graphite, performing ultrasonication, grinding mechanically and spray-drying granulating to obtain a first precursor;
calcining the first precursor in a protective atmosphere at 600°C-1200°C for 1h-8h to obtain a second precursor; and
placing the second precursor and an organic carbon source in a fusion machine with an adjusted rotational speed for fusing more than 0.5h, wherein the rotational speed of the fusion machine is adjusted to 500rpm-3000rpm, and the tool clearance width of the fusion machine is 0.01cm-1cm; then performing heating treatments of two stages under protective atmosphere, wherein in a first-stage heating, temperature is raised to 300°C-400°C in a heating rate of 1°C/min-3°C/min, and then preserved for 3h-6h; and in a second-stage heating, temperature is raised to 700°C-1000°C in a heating rate of 4°C/min-6°C/min and then preserved for 1h-8h.

16. A lithium-ion battery anode material, comprising a multi-component composite anode material according to any one of claims 1 to 4 or prepared by a method according to any one of claims 6 to 15.

17. A lithium-ion battery, comprising a lithium-ion battery anode material according to claim 16.
